# EUROPÄISCHE PATENTSCHRIFT

(11) **EP 2 351 460 B1**
(45) Veröffentlichungstag und Bekanntmachung des Hinweises auf die Patenterteilung: **24.04.2013**
(21) Anmeldenummer: 09756235.9
(22) Anmeldetag: 19.10.2009
(51) Int. Cl.: H05B 33/08

(54) **BETRIEBSSCHALTUNG FÜR LEUCHTDIODEN**
OPERATING CONNECTION FOR LIGHT EMITTING DIODES
CIRCUIT DE COMMANDE POUR DIODES ÉLECTROLUMINESCENTES

(30) Priorität: 20.10.2008 AT 60008 U
(43) Veröffentlichungstag der Anmeldung: 03.08.2011
(60) Teilanmeldung: 12004956.4
(73) Patentinhaber: Tridonic GmbH & Co KG, 6851 Dornbirn (AT); Tridonic AG, 8755 Ennenda (CH)
(72) Erfinder: MARENT, Günter, A-6780 Bartholomäberg (AT); ZIMMERMANN, Michael, CH-8888 Heiligkreuz (CH); BARTH, Alexander, A-6861 Alberschwende (AT); MAYRHOFER, Markus, A-6850 Dornbirn (AT)
(74) Vertreter: Barth, Alexander
(86) Internationale Anmeldenummer: PCT/AT2009/000406
(87) Internationale Veröffentlichungsnummer: WO 2010/045666

(56) Entgegenhaltungen:
- EP-A2- 0 948 241
- WO-A2-2004/006629
- DE-A1-102006 034 371

## Beschreibung

Die Erfindung betrifft eine Betriebsschaltung mit Leuchtdioden gemäß dem Oberbegriff des Patentanspruchs 1.

### Technisches Gebiet

Halbleiterlichtquellen wie beispielsweise Leuchtdioden sind während der letzten Jahre für Beleuchtungsanwendungen zunehmend interessant geworden. Der Grund dafür liegt unter anderem darin, dass entscheidende technische Innovationen und große Fortschritte sowohl bei der Helligkeit als auch bei der Lichteffizienz (Lichtleistung pro Watt) dieser Lichtquellen erzielt werden konnten. Nicht zuletzt durch die vergleichsweise lange Lebensdauer konnten sich Leuchtdioden zu einer attraktiven Alternative zu herkömmlichen Lichtquellen wie Glüh- oder Gasentladungslampen entwickeln.

### Stand der Technik

Halbleiterlichtquellen sind aus dem Stand der Technik hinreichend bekannt und werden im folgenden als LED (light-emitting-diode) abgekürzt. Dieser Begriff soll im folgenden sowohl Leuchtdioden aus anorganischen Materialien als auch Leuchtdioden aus organischen Materialien umfassen. Es ist bekannt, dass die Lichtabstrahlung von LEDs mit dem Stromfluss durch die LEDs korreliert. Zur Helligkeitsregelung werden LEDs daher grundsätzlich in einem Modus betrieben, in dem der Stromfluss durch die LED geregelt wird.

In der Praxis werden zur Ansteuerung einer Anordnung von einer oder mehrerer LEDs vorzugsweise Schaltregler, beispielsweise Tiefsetzsteller (Step-Down oder Buck Converter) verwendet. Ein solcher Schaltregler ist beispielsweise aus der DE 10 2006 034 371 A1 bekannt. Dabei steuert eine Steuereinheit einen hochfrequent getakteten Schalter (beispielsweise einen Leistungstransistor) an. Im eingeschalteten Zustand des Schalters fließt Strom über die LED Anordnung und eine Spule, die dadurch aufgeladen wird. Die zwischengespeicherte Energie der Spule entlädt sich im ausgeschalteten Zustand des Schalters über die LEDs (Freilaufphase). Der Strom durch die LED Anordnung zeigt einen zickzackförmigen zeitlichen Verlauf: bei eingeschaltetem Schalter zeigt der LED-Strom eine ansteigende Flanke, bei ausgeschaltetem Schalter ergibt sich eine abfallende Flanke. Der zeitliche Mittelwert des LED-stroms stellt den Effektivstrom durch die LED-anordnung dar und ist ein Maß für die Helligkeit der LEDs. Durch entsprechende Taktung des Leistungsschalters kann der mittlere, effektive Strom geregelt werden.

Die Funktion des Betriebsgeräts ist nun, einen gewünschten mittleren Stromfluss durch die LEDs einzustellen und die zeitliche Schwankungsbreite des Stroms, bedingt durch das hochfrequente Ein- und Abschalten des Schalters (typischerweise im Bereich oberhalb von 10 kHz), möglichst gering zu halten.

Eine große Schwankungsbreite des Stroms (Welligkeit oder Rippel) wirkt sich besonders bei LEDs nachteilig aus, da mit Veränderung der Stromamplitude sich das Spektrum des emittierten Lichts verändern kann. Um das emittierte Lichtspektrum während des Betriebs möglichst konstant zu halten, ist es bekannt, bei LEDs für Helligkeitsregelungen nicht die Stromamplitude zu variieren, sondern ein sogenanntes PWM (pulse-widthmodulation) - Verfahren anzuwenden.

Dabei werden den LEDs durch das Betriebsgerät niederfrequente (typischerweise mit einer Frequenz im Bereich von 100-1000 Hz) Pulspakete mit (im zeitlichen Mittel) konstanter Stromamplitude zugeführt. Dem Strom innerhalb eines Pulspakets ist der oben angeführter hochfrequente Rippel überlagert. Die Helligkeit der LEDs kann nun durch die Frequenz der Pulspakete gesteuert werden; die LEDs können beispielsweise gedimmt werden, indem der zeitliche Abstand zwischen den Pulspaketen vergrößert wird.

Eine praktische Anforderung an das Betriebsgerät ist, dass es möglichst flexibel und vielseitig eingesetzt werden kann, beispielsweise unabhängig davon, wie viele LEDs als Last tatsächlich angeschlossen sind und betrieben werden sollen. Die Last kann sich zudem während des Betriebs ändern, wenn beispielsweise eine LED ausfällt.

Bei herkömmlichen Technologien werden die LEDs in einem sogenannten 'continuous conduction mode' bzw. nichtlückendem Betrieb betrieben.

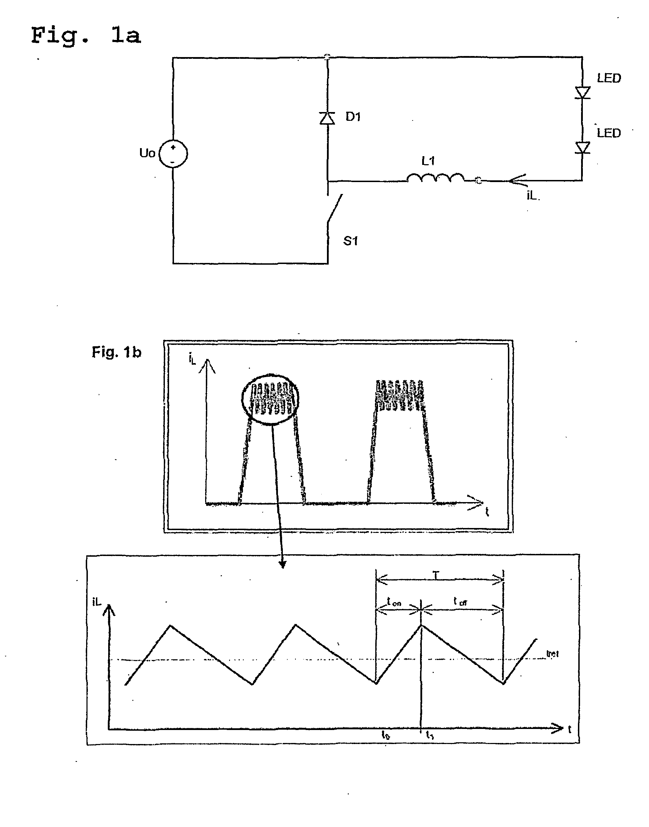

Dieses Verfahren sei anhand von Figur 1a und Figur 1b näher erläutert (Stand der Technik).

Im in Figur 1a gezeigten Beispiel ist als Grundschaltung ein Tiefsetzsteller bzw. Buck-Converter für den Betrieb zumindest einer LED (oder mehrerer in Serie geschalteten LEDs) dargestellt, die einen ersten Schalter S1 aufweist. Die Betriebsschaltung wird mit einer Gleichspannung bzw. einer gleichgerichteten Wechselspannung U0 versorgt.

Im eingeschalteten Zustand des ersten Schalters S1 (während der Zeitdauer t_on) wird in der Spule L1 Energie aufgebaut, die sich im ausgeschalteten Zustand des ersten Schalters S1 (Zeitdauer t_off) über zumindest eine LED entlädt. Der sich ergebende zeitliche Stromverlauf ist in Figur 1b abgebildet (Stand der Technik). Dabei sind zwei Pulspakte des PWM dargestellt. Der Stromverlauf innerhalb eines Pulspakets ist zudem vergrößert dargestellt. Aus Gründen der Farbkonstanz soll innerhalb eines Pulspakets die Amplitude des Rippels möglichst gering sein.

Dies kann durch geeignete Wahl des Einschaltzeitpunkts t0 und Ausschaltzeitpunkts t1 erfolgen. So können diese Zeitpunkte beispielsweise so gewählt werden, dass der erste Schalter S1 eingeschaltet wird, wenn der Strom einen bestimmten minimalen Referenzwert unterschreitet und der Schalter ausgeschaltet wird, wenn der Strom einen maximalen Referenzwert überschreitet. Dieses Verfahren hat aber mehrere Nachteile: Zum einen, um einen möglichst geringen Rippel zu erzielen, ist eine rasche Abfolge von Ein- und.Auschaltvorgängen notwendig. Die Steigung (positive bzw negative Flanke) des Stroms ist nämlich nicht vom Betriebsgerät steuerbar und als gegeben zu betrachten, da sie u.a. durch die Induktivität der Spule L1 und durch die Leistungsaufnahme der LEDs bestimmt ist.

Um die Welligkeit (Rippel) zu reduzieren, müssten innerhalb eines Zeitabschnitts mehr Schaltvorgänge stattfinden, was naturgemäß Schaltverluste mit sich zieht. Zum anderen sind diese Schaltverluste im continuous conduction mode besonders hoch.

Ein realer Halbleiterschalter schaltet zwar sehr rasch, er schaltet aber nicht unendlich schnell. Die beim Schaltvorgang dissipierte Energie ist umso größer, je länger der Schaltvorgang dauert und je höher die Leistung ist, die während dem Schaltvorgang am Schalter anliegt. Im nichtlückenden Betrieb sind nun die Schaltverluste besonders hoch, da die Schaltvorgänge stattfinden, während hohe Ströme anliegen.

Ein Beispiel für einen lückenden Betrieb ist in der EP0948241A2 dargestellt. Dort wechselt der Strom durch die LED allerdings zwischen einem vorgegebenen Maximum und dem Wert 0, wodurch ein hoher Rippel des Stromes auftritt.

Ein Beispiel für einen nichtlückenden Betrieb ist in der WO2004/006629A2 dargestellt.

### Darstellung der Erfindung

Es ist die Aufgabe der vorliegenden Erfindung, eine gegenüber dem Stand der Technik verbesserte Betriebsschaltung für wenigstens eine LED bereitzustellen, welche auf einfache Art und Weise die Konstanthaltung des Stroms und somit der LED-leistung ermöglicht.

Diese Aufgabe wird erfindungsgemäß durch die Merkmale des unabhängigen Anspruchs gelöst.

Gemäß einem ersten Aspekt der Erfindung wird der Betriebsschaltung für wenigstens eine LED eine Gleichspannung oder gleichgerichtete Wechselspannung zugeführt. Vorzugsweise wird mittels einer Spule und einem durch eine Steuer/Regeleinheit getakteten ersten Schalter eine Versorgungsspannung für wenigstens eine LED bereitstellt, wobei bei eingeschaltetem ersten Schalter in der Spule eine Energie zwischengespeichert wird, die sich bei ausgeschaltetem ersten Schalter über eine Diode und über der wenigstens eine LED entlädt.

Bei der erfindungsgemäßen Schaltung bestimmt die Steuereinheit die Zeitdauer toff zwischen einem Ausschalten und einem folgenden Einschalten des ersten Schalters abhängig von der Spannung über der Spule.

Die Betriebsschaltung weist einen Kondensator auf, der parallel zu der wenigstens eine LED angeordnet ist, und der während der Phase der Entmagnetisierung der Spule den Strom durch die LED aufrecht erhält, sodass der Strom durch die LEDs geglättet wird. Der Ausschaltzeitpunkt des ersten Schalters ist so gewählt, dass möglichst geringe Schaltverluste auftreten und der Stromfluss durch die wenigstens eine LED einen möglichst geringen Rippel aufweist.

Vorzugsweise bestimmt die Steuereinheit die Spannung über die Spule mittels einer induktiv an die Spule gekoppelten Wicklung.

Es ist vorteilhaft, wenn die Steuereinheit eine Offsetspannung zu der Spannung über der an die Spule gekoppelten Wicklung anlegt, um diese Spannung in einen positiven Bereich anzuheben. Die Offsetspannung kann nur während der Ausschaltphase des ersten Schalters angelegt werden.

Es ist vorgesehen, dass die Steuereinheit die Spannung über der an die Spule gekoppelten Wicklung über einen Analog-Digital-Wandler überwacht. Vorzugsweise bestimmt die Steuereinheit anhand der Spannung über der an die Spule gekoppelten Wicklung die Spannung über der LED während der Ausschaltphase.

In einer bevorzugten Ausführungsform der Erfindung weist die Betriebsschaltung eine erste Sensoreinheit, die ein vom Stromfluss durch den ersten Schalter abhängendes erstes Sensorsignal erzeugt, und/oder eine zweite Sensoreinheit auf, die ein Sensorsignal erzeugt und das Erreichen der Entmagnetisierung der Spule detektiert. Erfindungsgemäß verwendet die Steuereinheit ein Signal der ersten Sensoreinheit oder ein Signal der zweiten Sensoreinheit oder eine Kombination von beiden Signalen zur Festlegung des Ein- und Ausschaltzeitpunkts des ersten Schalters.

Erfindungsgemäß schaltet die Steuer/Regeleinheit den ersten Schalter aus, wenn der Strom durch den ersten Schalter einen maximalen Referenzwert überschreitet und schaltet zu dem Zeitpunkt wieder ein, wenn die Spule entmagnetisiert ist und/oder die Diode sperrt.

In einer bevorzugten Ausführungsform der Erfindung ist die erste Sensoreinheit ein Messwiderstand (Shunt).

In einer weiteren Ausführungsform der Erfindung ist die zweite Sensoreinheit eine induktiv an die Spule gekoppelten Sekundärwicklung oder ein Hallsensor.

In einer weiteren Ausführungsform erkennt die zweite Sensoreinheit das Erreichen der Entmagnetisierung der Spule, indem sie die Spannung oberhalb des Schalters mittels eines ohmschen Spannungsteilers überwacht.

Weitere bevorzugte Ausführungsformen und Weiterbildungen der Erfindung sind Gegenstand weiterer Unteransprüche.

Die vorliegende Erfindung wird nachfolgend anhand bevorzugter Ausführungsbeispiele unter Bezugnahme auf die beigefügten Zeichnungen näher beschrieben.
Figur 1a zeigt eine Schaltungsanordnung gemäß dem bekannten Stand der Technik
Figur 1b zeigt ein Diagram mit dem zeitlichen Verlauf des LEDstroms in der Schaltungsanordnung von Figur 1a (Stand der Technik)
Figur 2a zeigt ein erstes Beispiel einer erfindungsgemäßen Betriebsschaltung (Buck) für LEDs
Figur 2b zeigt ein Diagram, das zeitabhängige Stromverläufe und Steuersignale in der in Fig 2a dargestellten Schaltungsanordnung darstellt Figur 3 und Figur 4 zeigen spezielle Ausführungsformen der Erfindung
Figur 5 zeigt eine Abwandlung der Schaltung von Figur 2a (Buck-Boost)
Figur 6 zeigt eine weitere spezielle Ausführungsform der Erfindung
Figur 7 zeigt eine weitere Ausführungsform der Erfindung

Figur 1a und Figur 1b zeigen den Stand der Technik.

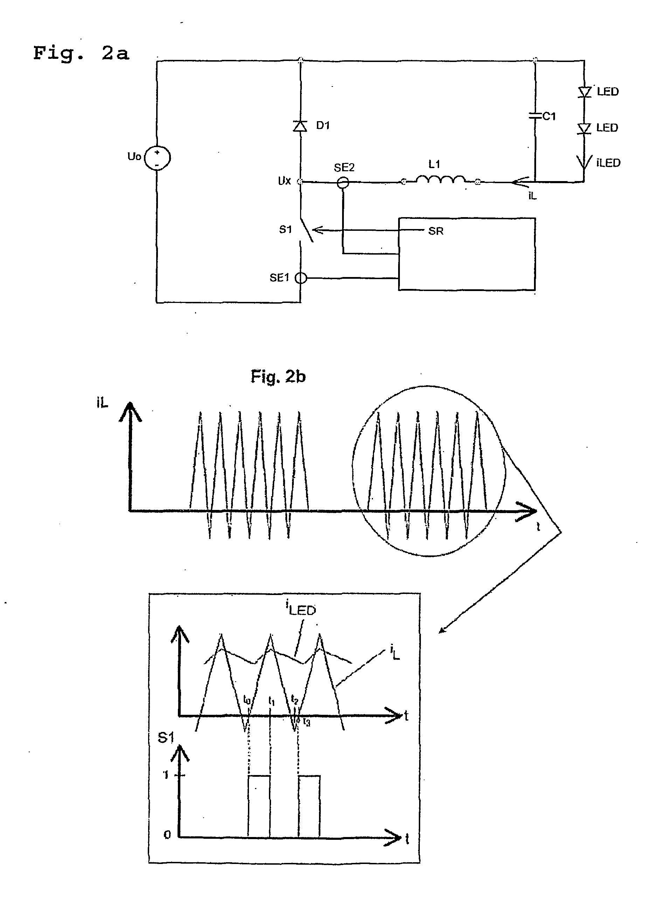

Die in Figur 2a dargestellte Schaltungsanordnung dient zum Betrieb von wenigstens einer (oder mehrerer in Serie und/oder parallel geschaltenen) LED. Im dargestellten Beispiel sind beispielsweise zwei LEDs in Serie geschaltet, es können natürlich auch nur eine oder auch mehrere LEDs sein. Die LED bzw. die seriell und/oder parallel geschaltenen LEDs werden im Folgenden auch LED-strecke genannt. Ein Vorteil der vorliegenden Erfindung ist, dass sich die Betriebsschaltung sehr flexibel an die Art und Anzahl der seriell verbundenen LEDs anpasst. Der Schaltung wird eine Gleichspannung U0 zugeführt, die natürlich auch eine gleichgerichtete Wechselspannung sein kann. Die LEDs sind in Serie mit einer Spule L1 und einem ersten Schalter S1 verbunden.

Zudem weist die Schaltungsanordnung eine Diode D1 (die Diode D1 ist parallel zu den LEDs und der Spule L1 geschaltet) und einen zu den LEDs parallel geschalteten Kondensator C1 auf. Im eingeschalteten Zustand des ersten Schalters S1 fließt Strom durch die LEDs und durch die Spule L1, die dadurch magnetisiert wird. Im ausgeschaltenen Zustand des ersten Schalters S1 entlädt sich die im Magnetfeld der Spule gespeicherte Energie in Form eines Stroms über die Diode D1 und die LEDs. Parallel dazu wird am Beginn des Einschaltens des ersten Schalters S1 der Kondensator C1 geladen.

Während der Ausschaltphase des ersten Schalters S1 (Freilaufphase) entlädt sich der Kondensator C1 und trägt zum Stromfluss durch die LED-strecke bei. Bei geeigneter Dimensionierung des Kondensators C1 führt dies zu einer Glättung des Stroms durch die LEDs.

Als erster Schalter S1 wird vorzugsweise ein Feldeffekttransistor oder auch Bipolartransistor verwendet. Der erste Schalter S1 wird hochfrequent geschaltet, typischerweise in einem Frequenzbereich von über 10 kHz.

Ein Vorteil der Erfindung ist, dass der erste Schalter S1 im Betrieb geschont wird, da er, wie später ausgeführt, vorzugsweise dann eingeschaltet wird, wenn die an ihm anliegende Leistung nahezu null ist.

Beim Stand der Technik dagegen, wo die Schaltvorgänge unter hoher Leistung ablaufen, muss für den ersten Schalter S1 ein hochwertiges Bauelement mit sehr kurzer Schaltdauer eingesetzt werden, um die Schaltverluste in einem tolerierbaren Rahmen zu halten.

Ein Vorteil der erfindungsgemäßen Schaltung ist, dass für den ersten Schalter S1 und die Diode D1 durchaus auch ein vergleichsweise billigeres Bauelement mit vergleichsweise etwas längerer Schaltdauer oder längerer Ausräumzeit eingesetzt werden kann.

In der Schaltung von Figur 2a ist weiters eine Steuer- und/oder Regeleinheit SR vorgesehen, die zur Regelung der LED-leistung die Taktung des ersten Schalters S1 vorgibt.

Die Steuer/Regeleinheit SR verwendet zur Festlegung des genauen Einschalt- und Ausgangszeitpunkts des ersten Schalters S1 als Eingangsgrößen Signale von einer ersten Sensoreinheit SE1 und/oder Signale von einer zweiten Sensoreinheit SE2.

Die erste Sensoreinheit SE1 ist in Serie zum ersten Schalter S1 angeordnet und erfasst den Stromfluss durch den ersten Schalter S1. Dies dient zur Überwachung des Stromflusses durch den ersten Schalter S1. Übersteigt der Stromfluss durch den ersten Schalter S1 einen bestimmten maximalen Referenzwert, so wird der erste Schalter S1 ausgeschaltet. In einer vorteilhaften Ausführungsform kann es sich bei der ersten Sensoreinheit SE1 beispielsweise um einen Messwiderstand (Shunt oder Strommesswiderstand) handeln.

Zur Überwachung des Stromflusses kann nun der Spannungsabfall am Messwiderstand (Shunt) abgegriffen werden und beispielsweise mittels eines Komparators mit einem Referenzwert verglichen werden. Überschreitet der Spannungsabfall am Messwiderstand (Shunt) einen bestimmten Wert, so wird der erste Schalter S1 abgeschaltet.

Die zweite Sensoreinheit SE2 ist innerhalb des Stromzweiges, der während der Freilaufphase vom Strom durchflossen wird, angeordnet, vorzugsweise in der Nähe oder an der Spule L1.

Mit Hilfe der zweiten Sensoreinheit SE2 kann die Steuereinheit/Regeleinheit SR einen geeigneten Zeitpunkt für den Einschaltzeitpunkt des ersten Schalters S1 festlegen.

Gemäß der Erfindung wird der erste Schalter S1 vorzugsweise dann eingeschaltet, wenn der Strom durch die Spule L1 zum ersten Mal null ist oder zumindest sehr gering ist, das heißt vorzugsweise in dem Zeitbereich, wenn die Diode D1 am Ende der Freilaufphase sperrt. Erfindungsgemäß liegt zum Einschaltzeitpunkt des ersten Schalters S1 ein möglichst geringer Strom am ersten Schalter S1 an. Durch Erkennen des Stromnulldurchgangs durch die Spule L1 wird ein nahezu verlustfreies Schalten ermöglicht. Gemäß der Erfindung zeigt der Strom durch die LEDs nur geringe Welligkeit und schwankt nicht stark. Dies ist auf die glättende Wirkung des zu den LEDs parallel geschalteten Kondensators C1 zurückzuführen. Während der Phase eines geringen Spulenstroms übernimmt der Kondensator C1 die Speisung der LED.

Die einzelnen Stromverläufe und der optimale Einschaltzeitpunkt des ersten Schalters S1 sollen anhand des Diagrams in Figur 2b näher erläutert werden.

Analog zu Diagram in Figur 1b ist der zeitliche Verlauf des Stroms i_L über zwei Pulspakete dargestellt.

Die vergrößerte Darstellung zeigt den Stromverlauf innerhalb eines PWM Pulspaketes: Es ist der zeitliche Verlaufs des Stroms i_L durch die Spule L1, der zeitliche Verlauf des Stroms i_LED durch die LEDs und der zeitliche Verlauf des Zustand des ersten Schalters S1 aufgetragen (Im Zustand 0 ist der erste Schalter S1 ausgeschaltet, im Zustand 1 ist der erste Schalter S1 geschlossen; die Signale für den Zustand des ersten Schalters S1 entsprechen dem Ansteuersignal (also am Gate) des ersten Schalters S1). Zum Zeitpunkt t_0 wird der erste Schalter S1 geschlossen und es beginnt ein Strom durch die LED und die Spule L1 zu fliessen. Der Strom i_L zeigt einen Anstieg gemäß einer Exponentialfunktion, wobei im hier interessierenden Bereich ein quasi-linearer Anstieg des Stroms i_L zu erkennen ist. i_LED unterscheidet sich von i_L dadurch, dass ein Teil des Stroms i_L zur Ladung des Kondensators C1 beiträgt.

Das Öffnen des ersten Schalters S1 zum Zeitpunkt t_1 (beispielsweise wenn ein gewünschter maximaler Referenzwert erreicht ist) hat zur Folge, dass sich die im Magnetfeld der Spule gespeicherten Energie über die Diode D1 und die LEDs bzw den Kondensator C1 entlädt. Der Strom i_L fließt in die gleiche Richtung weiter, nimmt aber kontinuierlich ab und kann sogar einen negativen Wert erreichen. Ein negativer Strom (d.h. ein Stromfluss mit umgekehrter Richtung) ist solange vorhanden, solange die Ladungsträger, die zuvor in der leitend gepolten Diode D1 angereichert wurden, aus der Sperrschicht der Diode D1 ausgeräumt sind.

Der Strom i_LED hingegen nimmt nur schwach ab und wird aufrechterhalten, da der Kondensator C1 glättend wirkt. Zum Zeitpunkt t_2 sperrt die Diode. Der Strom i_L nimmt ab (ist aber weiter negativ) und geht gegen null. In dieser Phase werden parasitäre Kapazitäten an der Diode D1 und weitere parasitäre Kapazitäten in der restlichen Schaltung umgeladen.

Die Spannungen am Knotenpunkt Ux oberhalb des ersten Schalters S1 und an der Spule L1 ändern sich in diesem Zeitraum sehr rasch. Die Spannung am Knotenpunkt Ux fällt auf einen niedrigen Wert ab (aufgrund des Sperrens der Diode D1). Ein vorteilhafter Wiedereinschaltzeitpunkt t_3 für den ersten Schalter S1 ist nun gegeben, wenn der Strom i_L den Nulldurchgang, oder zumindest die Nähe des Nulldurchgangs, erreicht. Zu diesem Zeitpunkt ist die Spule L1 nicht bzw kaum magnetisiert. Der erste Schalter S1 kann zu diesem Zeitpunkt mit sehr geringen Verlusten eingeschaltet werden, da kaum Strom durch die Spule L1 fließt. Ein Wiedereinschalten ist aber auch bereits zum Zeitpunkt t_2 oder kurz vorher möglich, da der Strom durch die Spule L1 in diesem Zeitbereich sehr niedrig ist.

Zur Detektion des vorteilhaften Einschaltzeitpunkts für den ersten Schalter S1 dient nun eine zweite Sensoreinheit SE2.

In einer ersten Ausführungsform kann beispielsweise der Strom i_L durch die Spule L1 erfasst werden. Dies erfordert aber relativ aufwendige Schaltungen. Der Strom i_L durch die Spule L1 kann beispielsweise mittels eines Hallsensors erfasst werden.

Zusätzlich oder alternativ können daher weitere/andere Größen herangezogen werden, die zur Detektion eines vorteilhaften Einschaltzeitpunkts geeignet sind. In einer weiteren vorteilhaften Ausführungsform kann beispielsweise der Magnetisierungszustand der Spule L1 erfasst werden. Es kann sich bei der zweiten Sensoreinheit SE2 beispielsweise um eine Sekundärwicklung L2 an der Spule L1 handeln, die die Spannung an der Spule L1 abgreift. Die Überwachung des zeitlichen Spannungsverlaufs an der Spule L1 (insbesondere des 'Einbruchs' kurz nach Sperren der Diode D1 nach dem Zeitpunkt t_2) ermöglicht eine Aussage über den vorteilhaften Wiedereinschaltzeitpunkts des ersten Schalters S1. In einer einfachen Ausführungsvariante würde ein Komparator reichen, der das Erreichen der Entmagnetisierung (und somit den Nulldurchgang) anhand des Über- bzw. Unterschreitens eines Schwellwerts erkennen kann.

Anstatt oder ergänzend zur Spannungsüberwachung an der Spule L1 kann beispielsweise die Spannung am Knotenpunkt Ux oberhalb des ersten Schalters S1 überwacht werden. Die Spannung am Knotenpunkt Ux fällt beim Sperren der Diode von einem hohen Wert signifikant ab auf einen niedrigen Wert. Das Signal zum Wiedereinschalten des ersten Schalters S1 kann daher bei Unterschreiten der Spannung Ux unter einem gewissen Schwellwert ausgelöst werden. Die Steuer/Regeleinheit SR schaltet den ersten Schalter S1 zu dem Zeitpunkt wieder ein, wenn die Spule L1 entmagnetisiert ist und/oder die Diode D1 sperrt. Die zweite Sensoreinheit SE2 kann dabei aus einer induktiv an die Spule L1 gekoppelten Sekundärwicklung L2 oder aus einem Spannungsteiler (R1, R2) am Knotenpunkt Ux bestehen.

Die Steuer/Regeleinheit SR verwendet die Information von der ersten Sensoreinheit SE1 und/oder der zweiten Sensoreinheit SE2 zur Festlegung des Aus- und Einschaltzeitpunkts des ersten Schalters S1. Die Regelung der (zeitlich gemittelten) LEDleistung durch SR kann beispielsweise in Form von PWM-Signalen erfolgen. Die Frequenz des PWM Signals liegt typischerweise in der Größenordnung von 100 - 1000 Hz.

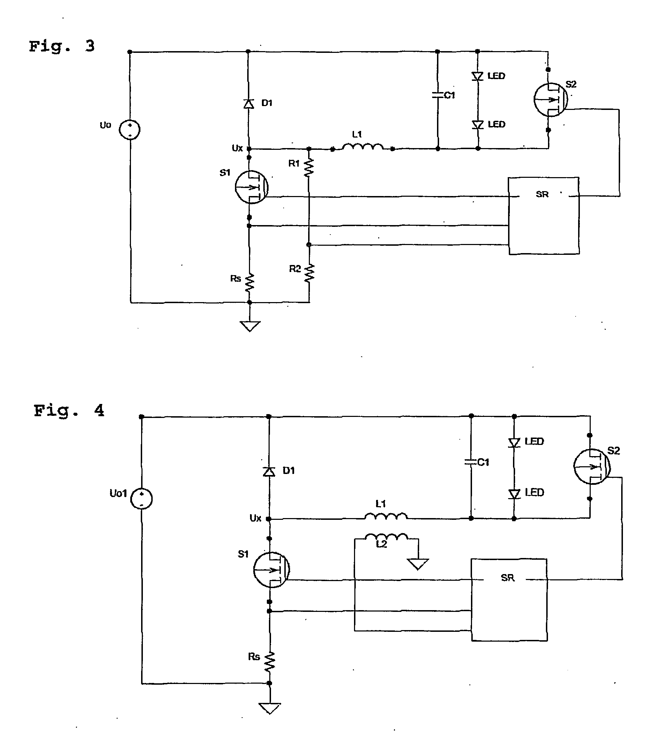

Figur 3 und Figur 4 zeigen spezielle Ausführungsformen der Erfindung.

In Figur 3 ist eine spezielle Ausführungsform der oben beschriebenen Schaltanordnung (eines Tiefsetzstellers bzw. Buck-Converter) dargestellt. Der vorteilhafte Ausschaltzeitpunkt wird hierbei mittels Erfassung der Spannung am Knotenpunkt Ux oberhalb des ersten Schalters S1 detektiert. Diese erfolgt durch den ohmschen Spannungsteiler R1 und R2. Der Knotenpunkt Ux liegt zwischen der Spule L1, der Diode D1 und dem ersten Schalter S1.

Als Spannungsteiler ist beispielsweise auch ein kapazitiver Spannungsteiler oder kombinierter Spannungsteiler, der aus Widerstand und Kapazität aufgebaut ist, möglich. Der Messwiderstand (Shunt) RS dient zur Stromerfassung durch den ersten Schalter S1. Die Überwachung des zeitlichen Spannungsverlaufs am Knotenpunkt Ux (insbesondere des 'Einbruchs' kurz nach Sperren der Diode D1 in der Nähe des Zeitpunkts t_2) ermöglicht eine Aussage über den vorteilhaften Wiedereinschaltzeitpunkt des ersten Schalters S1.

Anstatt oder ergänzend zu einer Spannungsüberwachung an der Spule L1 kann beispielsweise die Spannung am Knotenpunktes Ux oberhalb des ersten Schalters S1 überwacht werden. Die Spannung am Knotenpunkt Ux fällt beim Sperren der Diode von einem hohen Wert signifikant ab auf einen niedrigen Wert.

Das Signal zum Wiedereinschalten des ersten Schalters S1 kann daher bei Unterschreiten der Spannung Ux unter einem gewissen Schwellwert ausgelöst werden.

In der Schaltungsanordnung von Figur 3 ist zusätzlich ein zweiter Schalter S2 parallel zu den LEDs und dem Kondensator C1 angeordnet. Der zweite Schalter S2 ist selektiv/unabhängig ansteuerbar und kann beispielsweise ein Transistor (MOSFET oder Bipolartransistor) sein. Wird der zweite Schalter S2 geschlossen, so wird der Entladevorgang des Kondensators C1 beschleunigt. Durch die beschleunigte Entladung des Kondensators C1 wird erreicht, dass der Stromfluss durch die LED möglichst schnell gegen null geht.

Dies ist beispielsweise am Ende eines PWM-Pakets erwünscht, wo der Stromfluss durch die LED möglichst schnell abfallen soll d.h. die abfallende Flanke des Stromsverlaufs möglichst steil sein soll (aus Gründen der Farbkonstanz).

Vorzugsweise kann der zweite Schalter S2 bei niedrigem Dimmlevel aktiviert und angesteuert werden, wo die PWM-Pakete sehr kurz sind und es wichtig ist, dass der Strom durch die LED am Ende eines Pulspakets rasch gegen null geht. Beispielsweise kann durch geeignete Ansteuerung des zweiten Schalters S2 ein noch niedrigeres Dimmlevel erreicht werden.

Eine weitere Funktion dieses zweiten Schalters S2 ist, dass er im eingeschalteten Zustand die LEDs überbrückt. Dies ist beispielsweise erforderlich, wenn die LEDs ausgeschaltet werden sollen, d.h. kein Licht emittieren sollen, aber die Versorgungsspannung U0 noch anliegt. Ohne die Überbrückung durch den zweiten Schalter S2 würde ein (zwar kleiner) Strom über die LEDs und die Widerstände R1 und R2 fließen und die LEDs (geringfügig) leuchten.

Es sei angemerkt, dass die Anordnung eines zweiten Schalters S2 parallel zu den LEDs und dem Kondensator C1 zur beschleunigten Entladung des Kondensators C1 bzw. zur Überbrückung der LED nicht nur auf die spezielle Ausführungsform der Schaltungsanordnung von Figur 3 beschränkt ist, sondern bei allen Ausführungsformen der Erfindung angewandt werden kann.

Figur 4 zeigt eine Modifikation von der Schaltung in Figur 3 dahingehend, dass die Spannungsüberwachung an der Spule L1 erfolgt. Die Spannung an der Spule L1 kann beispielsweise mittels einer Sekundärwicklung L2, die an die Spule L1 gekoppelt ist (bzw eine zusätzliche Spule L2, die induktiv an die Spule L1 koppelt), erfasst werden.

Zur Detektion des vorteilhaften Einschaltzeitpunkts für den ersten Schalter S1 dient nun eine Sekundärwicklung L2.

Die Überwachung des zeitlichen Spannungsverlaufs an der Spule L1 (insbesondere des 'Einbruchs' kurz nach Sperren der Diode D1 nach dem Zeitpunkt t_2) ermöglicht eine Aussage über den vorteilhaften Wiedereinschaltzeitpunkt des ersten Schalters S1.

Die Bestimmung des Zeitpunkts des Nulldurchgangs bzw. der Entmagnetisierung kann wie bereits erwähnt auch mittels einer Schwellwertüberwachung erfolgen (auf das Unter- oder Überschreiten eines Schwellwerts, bei einer Überwachung mittels einer Sekundärwicklung L2 hängt die Polarität der Spannung von dem Wicklungssinn der Sekundärwicklung L2 zu der Spule L1 ab).

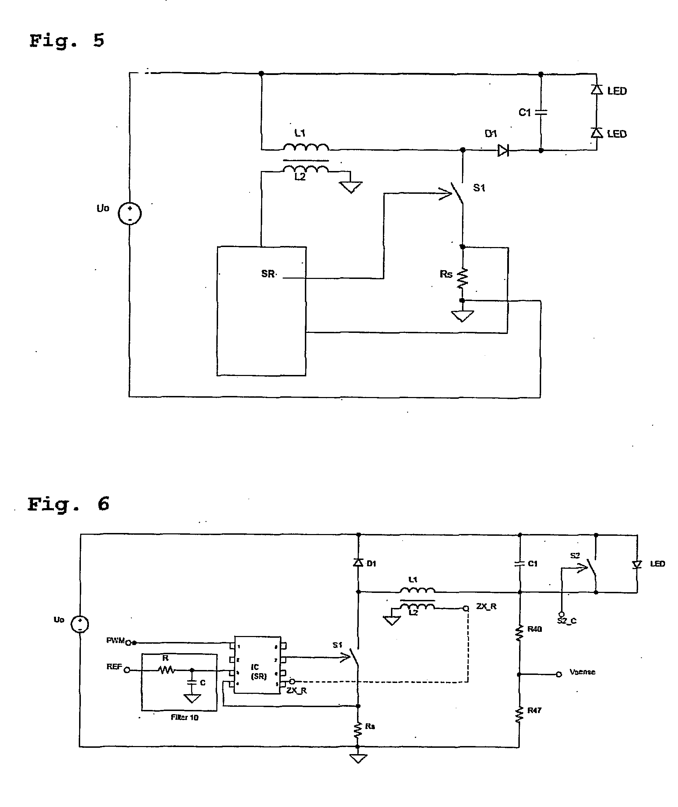

Es sei bemerkt, dass das Verfahren zur Detektion eines vorteilhaften Einschaltzeitpunkts für den ersten Schalter S1 natürlich auf andere Schaltungstopologien angewandt werden kann, so beispielsweise für einen sogenannten Sperrwandler bzw. Buck-Boost Converter oder einen sogenannten Durchflusswandler bzw. Forward Converter. Figur 5 zeigt eine Modifikation der Schaltung von Figur 2a dahingehend, dass die Anordnung der Drossel L1, der Diode D1 sowie die Orientierung der LED-strecke modifiziert ist (bildet Sperrwandler bzw. Buck-Boost Converter).

Eine Weiterbildung der Erfindung ist in Fig. 6 dargestellt. Die Erkennung des Erreichens der Entmagnetisierung der Spule L1 anhand Überwachung der Spannung an der Wicklung L2 kann durch einen standardmäßig verfügbaren Steuerschaltkreis IC durchgeführt werden. Dieser Steuerschaltkreis IC (integrierter Schaltkreis), entspricht der bzw. enthält die Steuer-/Regeleinheit SR gemäß Fig. 2 bis 5, verfügt über einen Eingang zur Erkennung des Erreichens der Entmagnetisierung einer Spule anhand Überwachung der Spannung an einer auf der Spule aufgebrachten Sekundärwicklung. Weiterhin verfügt der Steuerschaltkreis IC über einen Ausgang zur Ansteuerung eines Schalters und über weitere Überwachungseingänge. Ein erster dieser Überwachungseingänge kann für die Vorgabe eines Referenzwertes wie bspw. einer Referenzspannung genutzt werden.

Ein zweiter Überwachungseingang kann für die Überwachung des Erreichens einer maximalen Spannung oder auch anhand einer Spannungsmessung an einem Widerstand zur Überwachung des Erreichens eines maximalen Stromes genutzt werden.

Ein dritter Überwachungseingang kann für die Überwachung einer weiteren Spannung oder auch zur Aktivierung und Deaktivierung des Steuerschaltkreis IC oder der Ansteuerung den Steuerschaltkreis IC angesteuerten Schalters genutzt werden.

Gemäß der Fig. 6 überwacht der Steuerschaltkreis IC den Strom durch den ersten Schalter S1 während der Einschaltphase des ersten Schalters S1 über den Meßwiderstand (Shunt) Rs und den Eingang 4 am Steuerschaltkreis IC. Sobald die Spannung, die über dem Meßwiderstand (Shunt) Rs abgegriffen wird, einen bestimmten Maximalwert erreicht, wird der erste Schalter S1 geöffnet. Die Vorgabe der zum Öffnen des ersten Schalters S1 erforderlichen Höhe der Spannung kann durch die Vorgabe eines Referenzwertes (d.h. einer Referenzspannung) am Eingang 3 des Steuerschaltkreis IC angepasst werden. Beispielsweise kann von einem Microcontroller eine Referenzspannung vorgegeben werden, die die Höhe der maximal über dem Meßwiderstand (Shunt) Rs zulässigen Spannung und damit den maximal durch den ersten Schalter S1 zulässigen Strom vorgibt. Beispielweise kann der Microcontroller ein PWM-Signal ausgeben, dass dann durch ein Filter 10 geglättet wird (beispielsweise ein RC-Glied) und somit als Gleichspannungssignal mit einer bestimmten Amplitude an dem Eingang 3 des Steuerschaltkreis IC anliegt. Durch Änderung des Tastverhältnisses des PWM-Signales des Microcontrollers kann die Amplitude des Signales am Eingang 3 des Steuerschaltkreis IC angepasst werden.

Der Steuerschaltkreis IC kann über den Eingang 5 anhand der Überwachung der Spannung an einer auf der Spule L1 aufgebrachten Sekundärwicklung L2 das Erreichen der Entmagnetisierung der Spule L1 erkennen. Diese Erkennung kann als Wiedereinschaltsignal genutzt werden.

Sobald die Entmagnetisierung der Spule L1 durch den Steuerschaltkreis IC erkannt wurde, kann der Steuerschaltkreis IC den ersten Schalter S1 durch die Ansteuerung über den Ausgang 7 einschalten.

Der Steuerschaltkreis IC kann durch Anlegen einer Spannung am Eingang 1 aktiviert und / oder auch deaktiviert werden. Diese Spannung zum Aktivieren am Eingang 1 kann auch zwischen einen Hoch- und einem Tiefpegel wechseln, wobei bei Hochpegel der Steuerschaltkreis IC aktiviert wird und bei Tiefpegel zumindest die Ansteuerung des ersten Schalters S1 unterbricht.

Diese Ansteuerung des Eingangs 1 kann durch einen Microcontroller erfolgen. Beispielsweise kann auf diese Weise eine niederfrequente Aktivierung und Deaktivierung des Steuerschaltkreis IC und somit der Ansteuerung des ersten Schalters S1 erreicht werden und somit die niederfrequente Ansteuerung des Betriebsschaltung zum Dimmen der LED. Über den Eingang 1 kann über die Amplitude des an diesem Eingang anliegenden Signales weiterhin auch eine weitere Referenzspannung für den Steuerschaltkreis IC vorgegeben werden. Diese Spannung kann beispielsweise auch die Höhe des maximal zulässigen Stromes durch den Schalter beeinflussen oder aber auch die zulässige Einschaltdauer des ersten Schalters S1. Der Steuerschaltkreis IC und/oder der Steuerschaltkreis IC kombiniert mit dem Microcontroller können gemeinsam die Steuereinheit SR bilden.

Die Einschaltdauer des ersten Schalters S1 kann auch von einer weiteren Spannungsmessung innerhalb der Betriebsschaltung abhängig sein. Beispielweise kann dem Steuerschaltkreis IC auch eine Spannungsmessung Vsense zugeführt werden.

Über diese Spannungsmessung kann über einen Spannungsteiler R40/ R47 beispielweise eine Überwachung oder auch Messung der Spannung am Knotenpunkt zwischen Spule L1 und LED erfolgen.

Diese Spannungsmessung Vsense kann entweder einem weiteren Eingang des Steuerschaltkreises IC, als zusätzliche Größe additiv einem bereits belegten Eingang des Steuerschaltkreis IC oder auch einem Eingang des Microcontrollers zugeführt werden.

Somit kann ein System aufgebaut werden, bei dem zum einen eine einfache Ansteuerung zum Dimmen von LED durch niederfrequente PWM ermöglicht wird, zum anderen ein möglichst verlustarmer hochfrequenter Betrieb des Betriebsgerätes kombiniert mit einem möglichst konstanten Strom durch die LED. Es kann durch einen Microcontroller sowohl die Frequenz als auch das Tastverhältnis eines PWM-Singales zum Dimmen von LED vorgegeben werden, daneben kann auch die Höhe des maximal zulässigen Stromes durch den ersten Schalter S1 vorgegeben werden. Der Microcontroller kann über ein Signal, welches an den Eingang 1 des Steuerschaltkreis IC geführt wird, das Dimmen der LED durch niederfrequente PWM steuern. Weiterhin kann der Microcontroller über ein Signal, welches an den Eingang 3 des Steuerschaltkreis IC geführt wird, die Höhe des maximal zulässigen Stromes durch den ersten Schalter S1 oder auch die notwendige Einschaltdauer des ersten Schalters S1 vorgegeben.

Die Betriebsschaltung kann weiterhin einen weiteren Schalter S2 enthalten, der so angeordnet ist, dass dieser zweite Schalter S2 die LED überbrücken kann.

Der zweite Schalter S2 kann weiterhin so angeordnet sein, dass er den Strom durch einen vorhandenen hochohmigen Spannungsmesspfad oder eine ähnliche vorhandene hochohmige Schaltungsanordnung von der LED übernehmen oder diesen unterbrechen kann.

Durch Parallelschaltung des zweiten Schalters S2 zu den LED kann dieser die LED überbrücken und somit deaktivieren. Dieses Verfahren kann zum Einstellen der Helligkeit (Dimmen) der LED genutzt werden. Eine mögliche Variante wäre, dass das Dimmen über den zweiten Schalter S2 erfolgt, während über die Ansteuerung des ersten Schalters S1 nur der Strom durch die LED eingestellt und geregelt wird.

Es kann aber die Ansteuerung der beiden Schalter S1 und S2 für eine optimierte Dimmansteuerung kombiniert genutzt werden.

So kann beispielsweise der zweite Schalter S2 nur für das Dimmen auf niedrige Dimmlevel zusätzlich genutzt werden. Die Betriebsschaltung ist aufgrund der vorhandenen Topologie und der Regelschaltung so ausgelegt, dass die Ausgangsspannung der Betriebsschaltung (d.h. die Spannung über der LED) auf einen maximal zulässigen Wert begrenzt wird. Wird durch Schließen des zweiten Schalters S2 die LED überbrückt, dann begrenzt die Betriebsschaltung die Ausgangsspannung derart, dass kein überhöhter Strom fließen kann, der zu einer möglichen Zerstörung führen kann. Diese Ansteuerung des zweiten Schalters S2 kann beispielsweise nur für das Dimmen auf niedrige Dimmlevel genutzt werden.

Wenn der Tiefsetzsteller (Buck-Converter) fix auf Stromquellenbetrieb (im sogenannten Hysteritischen Modus wie in den Ausführungsbeispielen beschrieben) arbeitet und effizient läuft, können die LED einzig mit zweiten Schalter S2, der sehr niederohmig sein sollte, gedimmt werden, und die Verluste sind trotzdem gering.

Zusätzlich kann der zweite Schalter S2 so angesteuert werden, dass er den Strom durch einen vorhandenen hochohmigen Spannungsmesspfad oder eine ähnliche vorhandene hochohmige Schaltungsanordnung von der LED übernehmen kann.

Wenn beispielsweise gemäß Fig. 6 der erste Schalter S1 nicht getaktet wird, sollte kein Strom durch die LED fließen. Aufgrund des vorhandenen Spannungsteilers R40/ R47 kann jedoch ein geringer Strom durch die LED fließen. In diesem Fall kann bei einer gewünschten Deaktivierung der LED (beispielsweise wenn kein Licht abgegeben werden soll) der zweite Schalter S2 geschlossen werden, damit der Stromfluß durch die LED unterbrochen oder vermieden wird.

Der zweite Schalter S2 wird zumindest immer im Anschluss an ein niederfrequentes PWM-Paket angesteuert, um die LED zu überbrücken bzw. zu desaktivieren.

Eine Unterbrechung des Stromes durch die LED kann auch durch Anordnung des zweiten Schalters S2 in Serie mit den LED erfolgen.

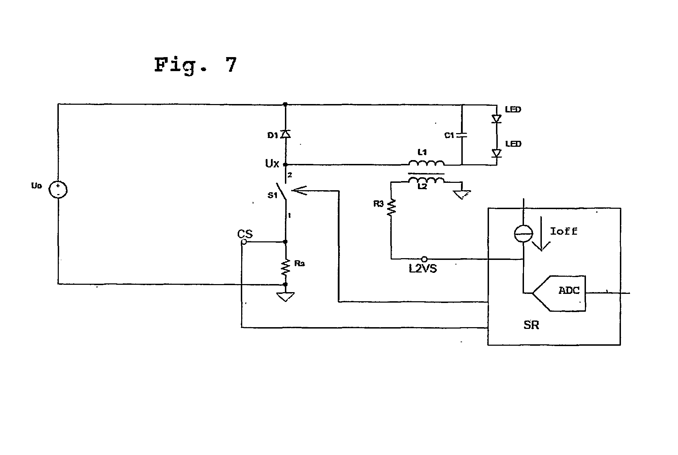

Eine weitere Ausführungsform der Erfindung ist in Fig. 7 dargestellt.

Der Betriebsschaltung für wenigstens eine LED wird eine Gleichspannung oder gleichgerichtete Wechselspannung zugeführt. Mittels einer Spule L1 und einem durch eine Steuereinheit SR getakteten Schalter S1 wird eine Versorgungsspannung für wenigstens eine LED bereitgestellt, wobei bei eingeschaltetem (ersten) Schalter S1 in der Spule L1 eine Energie zwischengespeichert wird, die sich bei ausgeschaltetem Schalter S1 über wenigstens eine LED entlädt. Die Betriebsschaltung kann so gesteuert werden, daß die Steuereinheit SR die Zeitdauer toff zwischen einem Ausschalten und einem folgenden Einschalten des Schalters S1 abhängig von der Spannung über der Spule L1 bestimmt. Dabei kann die Steuereinheit SR die Spannung über die Spule L1 mittels einer induktiv (transformatorisch) an die Spule L1 gekoppelten Wicklung L2 bestimmen.

Dabei kann die Steuereinheit SR eine Offsetspannung zu der Spannung über der an die Spule L1 gekoppelten Wicklung L2 anlegen, um diese Spannung in einen positiven Bereich anzuheben. Die Steuereinheit SR kann die Spannung über der an die Spule L1 gekoppelten Wicklung L2 über einen Analog-Digital-Wandler ADC überwachen.

Die Steuereinheit SR kann eine Offsetspannung zu der Spannung über der an die Spule L1 gekoppelten Wicklung L2 nur während der Ausschaltphase des Schalters S1 anlegen, um diese Spannung in einen positiven Bereich anzuheben.

Die Steuereinheit SR kann anhand der Spannung der Wicklung L2, die an die Spule L1 gekoppelt ist, die Spannung über der LED während der Ausschaltphase bestimmen. Während der Ausschaltphase ist die Diode D1 durchgeschaltet (leitend), so dass über ihr nur eine zu vernachlässigende Spannung von ca. 0,7 V abfällt. Die Spannung über der Spule L1 unterscheidet sich nur um die über der Diode D1 abfallende Spannung von der Spannung über den LED. Es kann somit entweder unter Vernachlässigung der Diode D1 abfallende Spannung oder unter Beachtung der der Diode D1 abfallende Spannung auf die Spannung über den LED geschlossen werden.

Anhand der somit bekannten Spannung über den LED kann auf den Strom durch die LED geschlossen werden.

Die an die Spule L1 gekoppelten Wicklung L2 bildet also eine zweite Sensoreinheit SE2. Die Spannung über der Spule L1 kann mittels einer zweiten Sensoreinheit SE2 (also über der an die Spule L1 gekoppelten Wicklung L2) überwacht werden.

Die zweite Sensoreinheit SE2 kann zusätzlich das Erreichen der Entmagnetisierung der Spule L1 beziehungsweise den Nulldurchgang des Spulenstromes erkennen, indem sie die Spannung über der an die Spule L1 gekoppelten Wicklung L2 überwacht.

Die Ausführungsform gemäß Figur 7 ist dadurch gekennzeichnet, dass die Spannung über der Spule L1 transformatorisch aus der Spule L1 mit einer zweiten Wicklung L2 ausgekoppelt und der Steuereinheit SR zugeführt wird.

Über die Wicklung L2, die an die Spule L1 magnetisch gekoppelt ist, kann die Spannung über der Spule L1 transformatorisch ausgekoppelt werden. Zusätzlich kann in der Einschaltphase des Schalters S1 der Spannungsabfall über dem Shuntwiderstand Rs überwacht werden, der den Spulenstrom repräsentiert.

In der Ausschaltphase dann (über einen Pin L2VS) Spannung über der Spule L1 erfasst, die transformatorisch aus der Spule L1 ausgekoppelt wird. Über die Spannung der Spule L1 kann man natürlich bei Kenntnis der Spulengröße (Induktivität der Spule L1) auch den Spulenstrom errechnen und somit auf den Strom durch die LED schließen. Dementsprechend ist eine direkte Messung des Stroms durch die LED entbehrlich. Eine solche Messung ist sehr aufwendig, da die LED nicht gegen Masse verschaltet sind und somit eine Messung über einen einfachen Stromshunt (Strommesswiderstand) nicht möglich ist.

Die Steuereinheit SR kann in einen Steuerschaltkreis IC enthalten sein.

Es kann aber für den Betrieb der Steuereinheit SR (beispielsweise eines Steuer-IC oder ASIC) ungünstig sein, wenn dem Eingangspin L2VS eine negative Spannung zugeführt wird. Aus diesem Grunde wird dem Eingangspin L2VS außerdem noch ein Offsetstrom Ioff zugeführt, um das Potential am Eingangspin L2VS anzuheben. Vorzugsweise wird der Offsetstrom Ioff intern innerhalb der Steuereinheit SR erzeugt und auch intern dem Eingangspin L2VS zugeführt.

Die Steuereinheit SR kann intern einen Digitalteil aufweisen. Die Erfassung einzelner Signale oder Messwerte kann über Analog-Digital-Wandler erfolgen und somit die erfassten Signale beziehungsweise Messwerte im Digitalteil verarbeitet werden.

Über einen oder mehrere Digital-Analog-Wandler kann dann wieder ein Ansteuersignal oder eine Initiierung eines Ansteuersignals ausgegeben werden (beispielsweise zur Ansteuerung des Schalters S1).

Die Überwachung der Spannung über der Spule L1 kann vorteilhafterweise bei einem sogenannten nichtlückenden Strombetrieb der Schaltung (insbesondere des Schalters S1) angewendet werden, aber auch bei einem sogenannten lückenden Strombetrieb oder einem sogenannten Grenzbetrieb zwischen dem nichtlückenden und lückenden Strombetrieb. Somit verläuft Strom durch die Drossel L1 sägezahnförmig um einen Mittelwert, entweder, ohne auf Null abzusinken (nichtlückender Strombetrieb), oder er sinkt auf Null (Grenzbetrieb zwischen dem nichtlückenden und lückenden Strombetrieb oder lückender Strombetrieb). Der Kondensator C1 parallel zu dem LED-Lastkreis kann sehr klein sein oder auch ganz weggelassen werden, vorzugsweise bei einem Betrieb im nichtlückenden Strombetrieb.

Diese Schaltung gemäß Figur 7 kann auch dazu dienen, während der Ausschaltphase den Nulldurchgang des Spulenstromes beziehungsweise das Erreichen der Entmagnetisierung der Spule L1 zu ermitteln. Die Kenntnis des Nulldurchganges (also das Erreichen der Entmagnetisierung der Spule L1) ist vorteilhaft, weil man den Zeitpunkt des Wiedereinschaltens des Schalters S1 gerne in diesen Nulldurchgang legt. Dadurch können Schaltverluste vermieden werden, und der Schalter wird thermisch weniger belastet. Es kann somit in der Einschaltphase des Schalters S1 der Spannungsabfall über dem Shuntwiderstand Rs ermittelt werden, und in der Ausschaltphase kann über die Wicklung L2 die Spannung der Spule L1 und / oder der Nulldurchgang des Spulenstromes ermittelt werden.

Die Schaltung gemäß Figur 7 kann genauso wie die Ausführungsbeispiele der Figuren 3, 4 und 6 um einen zweiten Schalter S2 erweitert werden, der die gleiche Funktionalität, wie anhand der Figuren 3, 4 und 6 beschrieben wurde, aufweisen kann.

Das Ausführungsbeispiel der Fig. 7 kann um Merkmale der anderen Ausführungsbeispiele erweitert werden, um die Funktionalität der Betriebsschaltung zu erweitern, insbesondere um den zweiten (weiteren) Schalter S2.

Die Steuereinheit SR kann auch wie bereits erwähnt in einem Steuerschaltkreis IC enthalten sein. Der Steuerschaltkreis kann beispielsweise zum Dimmen in der gleichen Weise wie bei dem Ausführungsbeispiel nach Figur 6 angesteuert werden (vorzugsweise über einen Microcontroller).

Das Beispiel der Fig. 7 (und die anderen natürlich auch) kann dahingehend erweitert werden, dass mehrere Betriebsschaltungen gemäß Figur 6 vorhanden sind. Die Steuerschaltkreise IC bzw. die Steuereinheiten SR der einzelnen Betriebsschaltungen werden von einem gemeinsamen Microcontroller aus angesteuert. Die einzelnen Betriebsschaltungen können beispielsweise LED-stränge unterschiedlicher Wellenlänge oder Farbe ansteuern. Die Ansteuerung des Microcontrollers kann über eine Schnittstelle (drahtlos oder leitungsgebunden) erfolgen. Dabei können Steuersignale zum Einstellen der Helligkeit oder Farbe oder auch Statusinformationen über die Schnittstelle übertragen werden.

Auf diese Weise kann eine LED Beleuchtungseinheit aufweisend eine oder mehrere erfindungsgemäße Betriebsschaltungen aufgebaut werden, die bei sehr hohem Wirkungsgrad sehr kompakt und unter einem geringen Bauteilbedarf aufgebaut werden kann.

## Patentansprüche

1. Betriebsschaltung für wenigstens eine LED, der eine Gleichspannung oder gleichgerichtete Wechselspannung zugeführt wird, und die mittels einer Spule (L1) und einem durch eine Steuereinheit (SR) getakteten ersten Schalter (S1) eine Versorgungsspannung für wenigstens eine LED bereitstellt, wobei bei eingeschaltetem ersten Schalter (S1) in der Spule (L1) eine Energie zwischengespeichert wird, die sich bei ausgeschaltetem ersten Schalter (S1) über wenigstens eine LED entlädt, und die Steuereinheit (SR) die Zeitdauer toff zwischen einem Ausschalten und einem folgenden Einschalten des ersten Schalters (S1) abhängig von der Erkennung des Erreichens der Entmagnetisierung der Spule (L1) bestimmt **gekennzeichnet dadurch, dass** ein Kondensator (C1) parallel zu der wenigstens eine LED angeordnet ist, und der Kondensator (C1) während der Phase der Entmagnetisierung der Spule (L1) den Strom durch die LED aufrecht erhält, so dass der Strom durch die LEDs geglättet wird.

2. Betriebsschaltung nach Anspruch 1 bei der die Steuereinheit (SR) die Spannung über die Spule (L1) mittels einer induktiv an die Spule (L1) gekoppelten Wicklung (L2) bestimmt.

3. Betriebsschaltung nach Anspruch 1 oder 2, bei der die Steuereinheit (SR) eine Offsetspannung zu der Spannung über der an die Spule (L1) gekoppelten Wicklung (L2) anlegt, um diese Spannung in einen positiven Bereich anzuheben.

4. Betriebsschaltung nach Anspruch 2 oder 3, **gekennzeichnet dadurch, dass** die Steuereinheit (SR) die Spannung über der an die Spule (L1) gekoppelten Wicklung (L2) über einen Analog-Digital-Wandler (ADC) überwacht.

5. Betriebsschaltung nach einem der Ansprüche 2 bis 4, bei der die Steuereinheit (SR) eine Offsetspannung zu der Spannung über der an die Spule (L1) gekoppelten Wicklung (L2) nur während der Ausschaltphase des ersten Schalters (S1) anlegt, um diese Spannung in einen positiven Bereich anzuheben.

6. Betriebsschaltung nach einem der vorangehenden Ansprüche, **gekennzeichnet dadurch, dass** die Steuereinheit (SR) anhand der Spannung über der an die Spule (L1) gekoppelten Wicklung (L2) die Spannung über der LED während der Ausschaltphase bestimmt.

7. Betriebsschaltung nach einem der vorangehenden Ansprüche, **gekennzeichnet dadurch, dass** die Wicklung (L2), die an die Spule (L1) gekoppelt ist, eine zweiten Sensoreinheit (SE2) bildet.

8. Betriebsschaltung nach einem der vorangehenden Ansprüche, **gekennzeichnet dadurch**, das die zweite Sensoreinheit (SE2) zusätzlich das Erreichen der Entmagnetisierung der Spule (L1) erkennt.

9. Betriebsschaltung nach einem der vorangehenden Ansprüche, aufweisend einen Steuerschaltkreis (IC), der die Steuereinheit (SR) enthält und über einen Eingang zur Überwachung der Spannung über die Spule (L1) mittels einer induktiv an die Spule (L1) gekoppelten Wicklung (L2) verfügt und abhängig von dieser Überwachung einen ersten Schalter (S1) ansteuert.

10. Betriebsschaltung nach einem der vorangehenden Ansprüche, aufweisend einen Microcontroller, der durch Anlegen einer Spannung an einem Eingang des Steuerschaltkreises (IC) diesen aktiviert und/ oder deaktiviert und an einem weiteren Eingang eine Referenzspannung für den Steuerschaltkreis IC vorgibt.

11. Betriebsschaltung nach einem der vorangehenden Ansprüche, **gekennzeichnet durch** einen zweiten Schalter (S2), der parallel zu dem Kondensator (C1) und den LEDs angeordnet ist und unabhängig vom ersten Schalter (S1) ansteuerbar ist.

## Claims

1. Operating circuit for at least one LED, to which a DC voltage or rectified AC voltage is supplied, and which provides a supply voltage for at least one LED by means of a coil (L1) and a first switch (S1), which is clocked by a control unit (SR), wherein, when the first switch (S1) is closed, energy is buffer-stored in the coil (L1), which energy is discharged via at least one LED when the first switch (S1) is open, and the control unit (SR) determines the duration toff between opening and subsequent closing of the first switch (S1) depending on the identification of attainment of the demagnetization of the coil (L1), **characterized in that** a capacitor (C1) is arranged in parallel with the at least one LED, and the capacitor (C1) maintains the current through the LED during the phase of demagnetization of the coil (L1), with the result that the current through the LEDs is smoothed.

2. Operating circuit according to Claim 1, in which the control unit (SR) determines the voltage across the coil (L1) by means of a winding (L2), which is coupled inductively to the coil (L1).

3. Operating circuit according to Claim 1 or 2, in which the control unit (SR) applies an offset voltage with respect to the voltage across the winding (L2), which is coupled to the coil (L1), in order to raise this voltage to a positive range.

4. Operating circuit according to Claim 2 or 3, **characterized in that** the control unit (SR) monitors the voltage across the winding (L2), which is coupled to the coil (L1), via an analogue-to-digital converter (ADC) .

5. Operating circuit according to one of Claims 2 to 4, in which the control unit (SR) applies an offset voltage with respect to the voltage across the winding (L2), which is coupled to the coil (L1), only during the opening phase of the first switch (S1) in order to raise this voltage into a positive range.

6. Operating circuit according to one of the preceding claims, **characterized in that** the control unit (SR) determines the voltage across the LED during the opening phase on the basis of the voltage across the winding (L2), which is coupled to the coil (L1).

7. Operating circuit according to one of the preceding claims, **characterized in that** the winding (L2), which is coupled to the coil (L1), forms a second sensor unit (SE2).

8. Operating circuit according to one of the preceding claims, **characterized in that** the second sensor unit (SE2) additionally identifies the attainment of the demagnetization of the coil (L1).

9. Operating circuit according to one of the preceding claims, having a control circuit (IC), which contains the control unit (SR) and has an input for monitoring the voltage across the coil (L1) by means of a winding (L2) which is coupled inductively to the coil (L1), and actuates a first switch (S1) depending on this monitoring.

10. Operating circuit according to one of the preceding claims, having a microcontroller, which activates and/or deactivates the control circuit (IC) by applying a voltage to an input of said control circuit and presets a reference voltage for the control circuit (IC) at a further input.

11. Operating circuit according to one of the preceding claims, **characterized by** a second switch (S2), which is arranged in parallel with the capacitor (C1) and the LEDs and is actuable independently of the first switch (S1).

## Revendications

1. Circuit d'attaque pour au moins une LED (diode électroluminescente) à laquelle est appliquée une tension continue ou une tension alternative redressée et qui délivre une tension d'alimentation à au moins une LED au moyen d'une bobine (L1) et d'un premier commutateur (S1) cadencé par une unité de commande (SR), dans lequel, lorsque le premier commutateur (S1) est fermé, une énergie est temporairement stockée dans la bobine (L1), laquelle énergie se décharge à travers au moins une LED lors de l'ouverture du premier commutateur (S1), et l'unité de commande (SR) détermine l'intervalle toff entre une ouverture et une fermeture suivante du premier commutateur (S1) en fonction de la détection du fait que la démagnétisation de la bobine (L1) a été atteinte, **caractérisé en ce qu'**un condensateur (C1) est disposé en parallèle à l'au moins une LED et **en ce que** le condensateur (C1) reçoit le courant passant à travers la LED à l'état redressé pendant la phase de démagnétisation de la bobine (L1) de manière à ce que le courant se décharge à travers les LED.

2. Circuit d'attaque selon la revendication 1, dans lequel l'unité de commande (SR) détermine la tension aux bornes de la bobine (L1) au moyen d'un enroulement (L2) couplé par induction à la bobine (L1).

3. Circuit d'attaque selon la revendication 1 ou 2, dans lequel l'unité de commande (SR) applique une tension de décalage à la tension aux bornes de l'enroulement (L2) couplé à la bobine (L1) afin de faire passer cette tension dans une région positive.

4. Circuit d'attaque selon la revendication 2 ou 3, **caractérisé en ce que** l'unité de commande (SR) surveille la tension aux bornes de l'enroulement (L2) couplé à la bobine (L1) par l'intermédiaire d'un convertisseur analogique-numérique (ADC).

5. Circuit d'attaque selon l'une quelconque des revendications 2 à 4, dans lequel l'unité de commande (SR) n'applique une tension de décalage à la tension aux bornes de l'enroulement (L2) couplé à la bobine (L1) que pendant la phase d'ouverture du premier commutateur (S1) afin de faire passer cette tension dans une région positive.

6. Circuit d'attaque selon l'une quelconque des revendications précédentes, **caractérisé en ce que** l'unité de commande (SR) détermine la tension aux bornes de la LED pendant la phase d'ouverture sur la base de la tension aux bornes de l'enroulement (L2) couplé à la bobine (L1).

7. Circuit d'attaque selon l'une quelconque des revendications précédentes, **caractérisé en ce que** l'enroulement (L2) qui est couplé à la bobine (L1) forme une seconde unité de détection (SE2).

8. Circuit d'attaque selon l'une quelconque des revendications précédentes, **caractérisé en ce que** la seconde unité de détection (SE2) détecte en outre le fait que la démagnétisation de la bobine (L1) a été atteinte.

9. Circuit d'attaque selon l'une quelconque des revendications précédentes, comprenant un circuit de commande (IC) qui contient l'unité de commande (SR) et qui comporte une entrée destinée à surveiller la tension aux bornes de la bobine (L1) au moyen d'un enroulement (L2) couplé par induction à la bobine (L1) et commande un premier commutateur (S1) en fonction de cette surveillance.

10. Circuit d'attaque selon l'une quelconque des revendications précédentes, comprenant un microcontrôleur qui active et/ou désactive le circuit de commande (IC) par application d'une tension à une entrée de celui-ci et établit à une autre entrée une tension de référence destinée au circuit intégré de commande.

11. Circuit d'attaque selon l'une quelconque des revendications précédentes, **caractérisé par** un second commutateur (S2) qui est disposé en parallèle au condensateur (C1) et aux LED et peut être commandé indépendamment du premier commutateur (S1).
